# EUROPEAN PATENT APPLICATION

(11) **EP 1 773 043 A1**
(43) Date of publication of application: **11.04.2007**
(21) Application number: 05292080.8
(22) Date of filing: 06.10.2005
(51) Int. Cl.: H04N 5/00

(54) **Method and system for storing data packets**

(71) Applicant: Dibcom, 91120 Palaiseau (FR)
(72) Inventor: Roux, Thierry, 92700 Colombes (FR)
(74) Representative: Blot, Philippe Robert Emile

(57) **Abstract**

The invention relates to a method of managing the storing of data packets into storage space of a buffer, each data packet being constituted of at least two data blocks comprising the steps of receiving (40) the data blocks of a current data packet and writing (42) in free storage space of the buffer the data blocks of the current data packet as received.

If there is not enough free storage space in the buffer (12) for writing a received data block of the current data packet, then the method continues with ceasing (48) to write received data blocks of the current data packet, and defining (48) at least one written data block of the current data packet as free storage space, so that received data blocks of a next data packet can be written over the written data blocks of the current data packet.

Application to digital television reception.

## Description

### TECHNICAL FIELD OF THE INVENTION

The invention relates to a method of managing the storing of data packets into storage space of a buffer.

### BACKGROUND OF THE INVENTION

Full-motion digital television requires a large amount of storage and data transfer bandwidth. Thus, digital television systems use video compression algorithms to reduce the amount of necessary storage and data transfer bandwidth. Current digital television systems use MPEG or MPEG-2 encoding to reduce the required data transfer bandwidth. MPEG-2 is defined in ITU-T H.222.0 (ISO/IEC 13818-1) "Generic Coding of Moving Pictures And Associated Audio Information". Thus, audiovisual sequences, such as movies or other content, are stored on the media server in an MPEG-2 compressed format, and the audiovisual sequence is decoded and typically converted to analog format for display and/or delivering to a user.

It has been well-known that a transport stream (TS) according to MPEG2, is a stream comprising compressed digital video, compressed digital audio, and the like. The TS is used in digital broadcasting, and contains multiplexed plural programs.

There are two types of MPEG-2 receivers used. First, in set-top boxes, the incoming MPEG-2 TS packets are processed by a dedicated hardware function, i.e., MPEG-2 TS demultiplexers which are able to handle the incoming bitstream. In this case, there is no data overflow. Moreover, if an exception were to occur such as temporary loss of signal, the MPEG-2 TS reader would easily be able to resynchronize by use of dedicated hardware functions.

The second type of MPEG-2 receiver is the use of a PC using PCI or USB interfaces. Typically, PCI MPEG2-TS receivers are PCI masters, and no FIFO overflow occurs because MPEG2-TS packets are written into the PC system memory by a dedicated hardware. Moreover, USB MPEG2-TS receivers generally use isochronous USB endpoints to transfer the MPEG2-TS packets, which guarantee a data read bit rate with the main drawback in this type of transfer being that it reserves the USB bandwidth whatever the actual bit rate.

Therefore, all these MPEG-2 receivers do not experience overflow, at the cost of high complexity.

On the other hand, there are more simple USB MPEG-2 TS receivers that do not use USB isochronous endpoints.

However, problems of data overflow and overflow management can occur in these receivers, whatever the transmission mode, satellite, cable or terrestrial. Conventionally, overflow management is unable to guarantee a data read bit rate greater than the received data bit rate (e.g., a PC which can temporarily be overloaded) and cannot maintain the synchronization required for the MPEG-2 TS packets. Specifically, it is critical to guarantee that the MPEG-2 TS reader can receive full MPEG-2 TS packets and stays synchronized if its data read bit rate is temporally lower than the received bit rate.

Therefore, there is a need for an improved method and system for storing data packets and managing overflow situation in a simple and thus economical way.

### SUMMARY OF THE INVENTION

Accordingly, the invention provides an improved method of storing data packets according to claim 1. Other features of the method are recited in the dependant claims 2-5.

The invention further provides a system for storing data packets according to claim 6 or 7.

The invention further provides a MPEG-2 TS receiver according to claim 8, and a computer program product according to claim 9.

### BRIEF DESCRIPTION OF THE DRAWINGS

- Figure 1 is a representation of a data packet;
- Figure 2 is a representation of a system for storing data packets such as the data packet of figure 1;
- Figure 3 is a representation of the system of figure 2 in an overflow situation; and
- Figures 4A and 4B are block-diagrams of a method of managing the storing of data packets.

### DETAILED DESCRIPTION

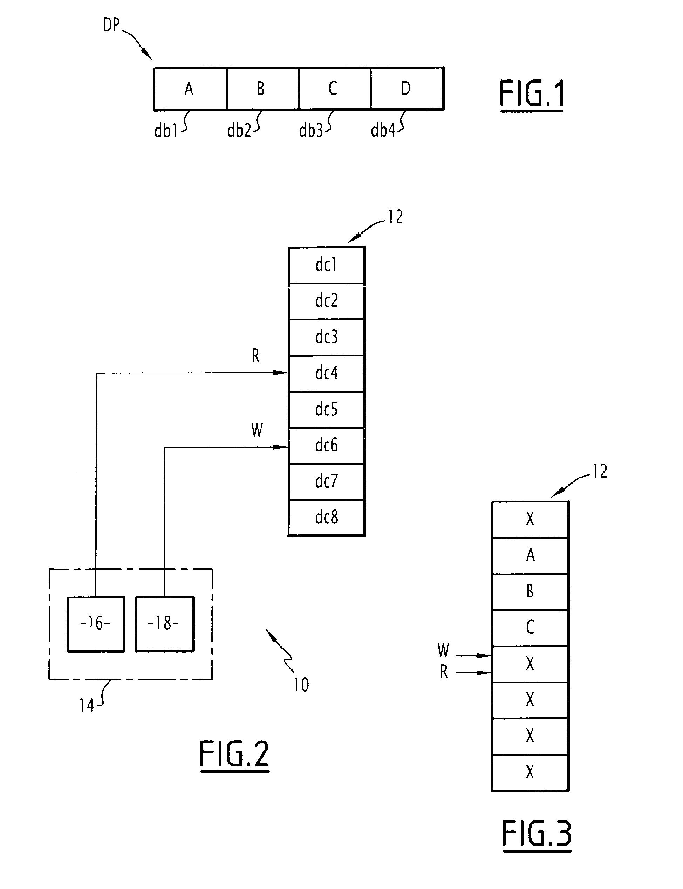

Figure 1 represents a data packet DP constituted of four data blocks db1, db2, db3 and db4. In the embodiment described, the data packet DP is a MPEG-2 transport stream packet. Each data packet db1, db2, db3 and db4 respectively contains data A, B, C, and D.

Figure 2 represents a system 10 for storing data packets, such as the data packet DP of figure 1. The system 10 comprises a first-in-first-out buffer 12 having a storage space, and means 14 for managing the storing of data packets into the storage space of the buffer 12. In the following description, both the buffer and its storage space are designated by the reference 12.

The buffer 12 comprises eight data cells, dc1 to dc8, intended to store data. Each is associated with a unique address. The buffer 12 may be implemented in a Random Access Memory (RAM) of a computer.

In this description, data cells and data blocks have the same size, for instance one byte. Of course, they can also have different sizes.

The managing means 14 comprise a read pointer management unit 16 and a write pointer management unit 18.

The read pointer management unit manages a read pointer R indicating the location in the buffer storage space 12 of a data cell whose data are to be read. In figure 2, the read pointer R contains the address of the data cell dc4.

The write pointer management unit 18 manages a write pointer W indicating the location in the buffer storage space 12 of a data cell where data are to be written. In figure 2, the write pointer W contains the address of the data cell dc6.

Both pointers R and W proceed over the buffer storage space along a same proceeding loop path that goes from data cell dc1 to data cell dc8, then goes back to data cell dc1.

The managing means 14 are further able to store the address of a data cell where the first data block of a data packet is written. This will be explained below.

Preferably, the read/write pointers are stored in a pointer register (not shown).

Figure 3 represents an overflow situation, that is to say a situation where there is not enough free storage space for writing a received data block. The free storage space is either data cells with no data or data cells with already read data. Thus, the free storage space of buffer 12 is constituted by the "distance" from the write pointer W to the read pointer R over the proceeding path, i.e. the data cells between the write pointer W and the read pointer R.

In the overflow situation of figure 3, the write pointer W has caught up the read pointer R over the proceeding path. Thus, all the storage space of the buffer is full with unread data.

In the example depicted, the first three data blocks db1, db2, and db3 have been received and their corresponding data A, B and C have been written. However, it is not possible to write data D of the received data block db4,

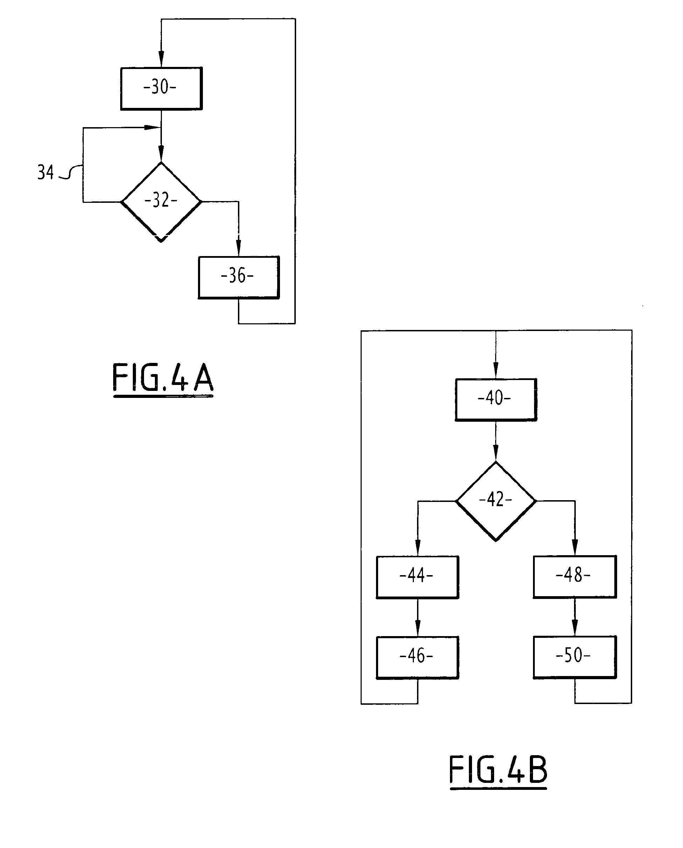

Figures 4A and 4B are block-diagrams of a method of managing the storing of data packets into the storage space of the buffer 12, which is achieved by managing means 14.

The managing of storing data packets comprises a data packet reading method, shown in figure 4A, and a data packet writing method, shown in figure 4B. These two methods are executed simultaneously, in parallel.

Referring to figure 4A, the reading method comprises a first step 30 of reading the data written in the data cell indicated by the read printer R.

The method continues with a step 32 of testing if readable data are written in the next data cell. If this is not the case, i.e. if the write pointer indicates this next data cell, then writing of new data is waited, which is represented by arrow 34 leading back to testing step 32.

If there is readable data, i.e. if the write pointer does not indicate the next data cell, then the method continues with a step 36 of incrementing the read pointer R so that it indicates the next data cell, and goes back to the reading step 30.

Now, referring to figure 4B, the writing method comprises a first step 40 of receiving a data block of a current data packet being received.

The method then comprises a step 42 of testing if there is enough free storage space for writing a new subsequently received data block. This is achieved by determining the storage space over the proceeding loop path from the write pointer to the read pointer.

If there is enough free storage space, i.e. if the write pointer W is not equal to the read pointer R, then the method continues with a step 44 of writing the received data block in the data cell indicated by the write pointer W, and incrementing the write pointer W so that it indicates the next data cell of the proceeding loop path.

If the written data block is the first block of a data packet, for instance the data block db1 of the data packet DP of figure 1, then its location address is saved by managing means 14. This is represented by block 46 on figure 4B. Then the method goes back to receiving step 40 for managing the storage of subsequently received data blocks of the current data packet.

If there is not enough free storage space, i.e. if the write pointer W is equal to the read pointer R, then the method goes on with a step 48 of ceasing to write received data blocks of the current data packet, and shifting the write pointer W to the location address of the first written data block of the data packet that is currently being received, which location address was saved at step 46.

Then, in a waiting step 50, new received data blocks of the current data packet are discarded, i.e. not written into the buffer 12. Upon reception of a first block of a new data packet, the method goes back to receiving step 40.

Because of the shifting of the write pointer W, received data blocks of the next data packet can advantageously be written over the already written data blocks of the previous data packet.

Actually, in many applications such as MPEG-2 data reception, an incomplete data packet cannot be used and is then discarded by the application using the buffer 12.

Overwriting this data packet provides more free storage space for the subsequent data packet, thus reducing the chance that overflow occurs again.

## Claims

1. Method of managing the storing of data packets into storage space of a buffer (12), each data packet (DP) being constituted of at least two data blocks (db1, db2, db3, db4), comprising the steps of:
- receiving (40) the data blocks of a current data packet,
- writing (42) in free storage space of the buffer (12) the data blocks of the current data packet as received,
**characterised by**:
- if there is not enough free storage space in the buffer (12) for writing a received data block of the current data packet, then:
- ceasing (48) to write received data blocks of the current data packet, and
- defining (48) at least one written data block of the current data packet as part of the free storage space, so that received data blocks of a next data packet can be written over the written data blocks of the current data packet.

2. Method according to claim 1, **characterised in that**, for the defining step (48), all the written data blocks of the current data packet are defined as part of the free storage space.

3. Method according to claim 1 or 2, **characterised in that** the buffer (12) is a first-in-first-out buffer.

4. Method according to claim 3, wherein a write pointer (W) indicates the location in the buffer storage space (12) where a data block is to be written, a read pointer (P) indicates the location in the buffer storage space (12) where a received written data block is to be read, both pointers proceeding over the buffer storage space along a same proceeding loop path, **characterised in that** it comprises the step of saving (43) the location of the first written data block of the current data packet, and **in that**:
- the step (44) of determining if there is no free storage space (12) left comprises determining the storage space (12) over the loop path from the write pointer (W) to the read pointer (P), and
- the step (48) of defining the at least one written data block of the current data packet as part of the free storage space comprises shifting the write pointer (W) to the saved location of the first written data block of the current data packet.

5. Method according to any of claims 1 to 4, **characterised in that** the current data packet is a MPEG-2 transport stream packet.

6. System for storing data packets, each data packet (DP) being constituted of at least two data blocks (db1, db2, db3, db4), comprising a buffer having storage space, **characterised in that** it comprises means (14) for managing the storing of data packets into the storage space of the buffer (12), the managing means (14) being arranged to execute a method according to claim 1 or 2.

7. System according to claim 6, **characterised in that** the buffer is a first-in-first-out buffer, and **in that** the managing means (14) are arranged to execute a method according to claim 3 or 4.

8. MPEG-2 receiver **characterised in that** it comprises a system according to claim 6 or 7 for storing MPEG-2 transport stream data packets,

9. Computer program product directly loadable into the internal memory of a digital computer, comprising software code portions for performing the steps of any of claims 1 to 5 when said product is run on a computer.
